Europäisches Patentamt

European Patent Office

Office européen des brevets

(19)

(11) **EP 0 779 522 B1**

(12) **FASCICULE DE BREVET EUROPEEN**

(45) Date de publication et mention
de la délivrance du brevet:
**26.03.2003 Bulletin 2003/13**

(51) Int Cl.7: **G02B 6/12**

(21) Numéro de dépôt: **96402662.9**

(22) Date de dépôt: **09.12.1996**

(54) **Procédé pour la réalisation de réseaux de Bragg dans un guide optique en verre fluoré de type PZG, ainsi que réseau de Bragg ainsi réalisé**

Prozess zur Herstellung eines Bragg-Gitters in einem optischen Wellenleiter aus PZG-Fluoridglas sowie dadurch hergestelltes Bragg-Gitter

Process for manufacturing a Bragg grating in an optical guide made of a fluoride glass of the PZG type as well as Bragg grating thus manufactured

(84) Etats contractants désignés:
**DE GB**

(30) Priorité: **11.12.1995 FR 9514648**

(43) Date de publication de la demande:
**18.06.1997 Bulletin 1997/25**

(73) Titulaire: **FRANCE TELECOM**
**75015 Paris (FR)**

(72) Inventeurs:
  • **Boulard, Brigitte**
    **72100 Le Mans (FR)**
  • **Jacoboni, Charles**
    **72380 Ste Jamme-Sur-Sarthe (FR)**
  • **Douay, Marc**
    **59000 Lille (FR)**

(74) Mandataire: **Martin, Jean-Jacques**
    **Cabinet Régimbeau**
    **20, rue de Chazelles**
    **75847 Paris cedex 17 (FR)**

(56) Documents cités:
  **EP-A- 0 588 718      WO-A-91/15787**
  **WO-A-95/26519**

  • **JOURNAL OF NON-CRYSTALLINE SOLIDS, vol. 184, 1 Mai 1995, pages 282-285, XP000569689 POIGNANT H ET AL: "ULTRAVIOLET-INDUCED PERMANENT BRAGG GRATINGS IN CE-DOPED FLUOROZIRCONATE GLASSES OR OPTICAL FIBERS"**
  • **Physical Review B, Vol.39, No.9, Mars 1989, pages 6076-6081**
  • **Physical Review B, Vol.34, No.6, Septembre 1986, pages 4213-4220**
  • **Physical Review B, Vol.35, No.8, Mars 1987, pages 4109-4112**

## Description

La présente invention concerne un nouveau procédé de réalisation de réseaux inscrits photoréfractifs de type réseaux de Bragg, à partir d'un guide d'onde planaire comprenant un substrat revêtu d'un film en verre fluoré, de type $PbF_2$, $ZnF_2$, $GaF_2$, encore appelé par l'abréviation PZG.

Elle concerne également les réseaux photoréfractifs du type réseaux de Bragg photoinscrits dans un guide d'ondes, tels qu'ils peuvent être obtenus par ledit procédé.

Les composants optiques du type réseaux de Bragg formés dans une structure guidante nécessitent la maîtrise locale de l'indice de réfraction de cette structure guidante.

Il est déjà connu de réaliser de tels réseaux de Bragg à partir de matériaux photosensibles (fibres optiques ou guides planaires) par photoinscription à l'aide d'un rayonnement dans le domaine de l'ultra-violet.

Les fibres optiques les plus couramment utilisées en télécommunication sont les fibres germanosilicates monomodes. Dès 1978, la photosensiblité de ces fibres a été mise en évidence par K.O. Hill et al, Appl. Phys. Lett. Vol. 32 (10 (1978) p. 647-649.

Toutefois, l'ordre de grandeur typique des variations d'indice induites lors de l'insolation UV des fibres germanosilicates s'avère le plus souvent limité à quelques $10^{-5}$.

La photosensibilité d'autres verres avec d'autres dopants a également été étudiée.

Ainsi, la photosensibilité des verres de silicate dopés au cérium a été décrite par L. Dong et al, vol. 10 (1991) OSA technical digest series optical society of America, Washington D.C. 1991, paper n° JTUB2.

On a récemment mis en évidence la photosensibilité des verres fluorés de type ZBLAN et ZBLALi dopés au cérium (H. Poignant et al, Journal of Non-Crystalline Solids, vol. 184 (1995) p. 282-285).

Ce document divulgue un procédé pour la réalisation de réseaux de Bragg dans un guide d'onde, selon lequel le matériau dudit guide est un verre fluoré à base de $ZrF_4$ où $H_fF_4$, dopé avec au moins un élément (Cérium) choisi dans le groupe constitué par les ions terres rares, qui présente des propriétés de photosensibilité, c'est-à-dire une aptitude à subir une modification significative de son indice de réfraction sous l'effet d'une insolation par un rayonnement dans le domaine de l'ultraviolet, les réseaux réfractifs désirés étant réalisés dans ledit guide par une insolation ultraviolette appropriée.

Les documents Physical Review B, Vol. 39 n°9, Mars 1989, P. 6076-6081 et Physical Review B, Vol. 34 n°6, Septembre 1986, P. 4213-4220 concernent des analyses des propriétés de réseaux réalisés dans des verres dopés Eu. Il ressort de ces documents que tout verre fluoré dopé avec au moins un élément de la famille des terres rares n'entraîne pas nécessairement automatiquement la photosensibilité dudit verre fluoré ainsi dopé.

On connaît par ailleurs des verres appartenant au système vitreux $PbF_2$, $ZnF_2$, $GaF_2$ (PZG). En particulier, la demande de brevet FR-A-2 643 360 décrit un procédé de dépôt en phase vapeur d'un verre fluoré sur un substrat en fondant les constituants du verre à déposer, dans un bain d'accueil constitué par un mélange fondu de fluorures formant lui-même une composition vitrifiable constituée d'éléments moins volatils que les fluorures du verre à déposer.

Pratiquement, on met en contact ledit substrat avec les vapeurs provenant d'un bain fondu de fluorures métalliques comprenant un bain

d'accueil ayant la composition suivante (en mole % ; total 100 %) :

- 9-26 $YF_3$
- 19-28 $BaF_2$
- 35-40 $InF_3$
- 18-25 $M'F_2$ (M'=Mn, Cd, Zn)
- 0-10 d'adjuvant

et comprenant en outre les autres ingrédients du verre fluoré à déposer.

Dans la demande de brevet FR-A-2 695 943, (qui correspond à EP-A-0 588 718) on a décrit par le même procédé de dépôt en phase vapeur l'obtention d'un film en verre fluoré comportant des éléments dopants. Les exemples décrits dans cette demande de brevet sont relatifs aux éléments dopants suivants : yttrium (Y), erbium (Er), ytterbium (Yb), néodyme (Nd), praséodyme (Pr). Le document évoque un verre dopé par au moins un élément de la famille des terres rares.

Selon cette demande de brevet, les flux de vapeur sont émis de manière simultanée à partir d'au moins deux creusets, un premier creuset contenant un bain d'accueil et les fluorures métalliques de base constituant ledit verre fluoré et au moins un second creuset contenant des éléments dopants constitués par au moins un halogénure de terre rare.

A la connaissance du déposant, aucun document publié ne décrit la photosensibilité de ce type de verre.

De manière inattendue, les inventeurs de la présente demande ont découvert que certains films en verres fluorés de type PZG dopés par des ions terres rares choisis de façon appropriée révèlaient une photosensibilité remarquable permettant d'obtenir par insolation des différences d'indice photoinduites importantes : typiquement supérieures ou égales à $10^{-3}$.

Ainsi, l'invention propose un nouveau procédé pour la réalisation de réseaux de Bragg, tel que défini dans les revendications annexées 1 à 6.

Par quantité efficace, on entend que la variation d'indice résultant de l'insolation sera importante, de préférence supérieure à environ $10^{-3}$.

Le substrat est de nature à permettre l'association avec un film de type PZG.

Le constituant du substrat peut être par exemple choisi parmi un verre fluoré, l'alumine, la silice, un métal, le silicium, un matériau semi-conducteur comme par exemple InP ou GaAs. Parmi les verres fluorés pouvant servir de substrat, on citera par exemple les verres à base de fluorure de zirconium (ZBLAN) ou de Hafnium qui sont décrits notamment dans les demandes de brevet français n° 2 354 977 et 2 384 724, les fluorures monocristallins tels que les fluorures de calcium, de baryum, etc.

Une composition typique de verre fluoré de type PZG pour le film comprend en mole % :

- 33 à 43 $PbF_2$
- 32 à 42 $GaF_3$
- 20 à 30 $ZnF_2$

éventuellement des fluorures de manganèse, de cadmium, d'indium ou d'aluminium et des adjuvants.

En tout état de cause, l'invention n'est pas limitée à une composition de verre fluoré de type PZG particulière, mais comprend au contraire de manière générale tous les compositions de verre de type PZG, notamment celles bien connues de l'homme du métier.

Par ions terres rares, on entend les éléments de la famille des lanthanides et l'yttrium dont le rayon et les propriétés chimiques sont similaires aux lanthanides lourds.

Parmi les ions terres rares on citera notamment $Er^{3+}$, $Yb^{3+}$, $Nd^{3+}$, $Pr^{3+}$, $Ce^{3+}$, $Eu^{2+}$.

Lesdits éléments dopants sont de préférence présents dans le film dans une proportion égale ou inférieure à 10 % en mole.

L'invention concerne tout particulièrement les guides d'ondes planaires dont les éléments dopants sont choisis parmi les ions $Ce^{3+}$ ou $Eu^{2+}$.

Les inventeurs, en l'état actuel de leurs connaissances, ne sont pas en mesure d'expliquer les résultats remarquables observés à partir de ces guides d'ondes. En effet, les processus physiques à l'origine de la photoréfractivité liée aux ions de terres rares dans différentes matrices sont encore largement inconnus et sont toujours l'objet de recherches.

La longueur d'onde excitatrice doit être inférieure à 300 nm. La longueur d'onde est choisie en fonction des bandes d'absorption dans l'UV de la terre rare utilisée, du pas du réseau (limité à $\lambda/2$) et des lasers disponibles.

La longueur d'onde excitatrice peut être comprise entre 240 et 245 nm pour les ions $Ce^{3+}$, $Eu^{2+}$.

Selon que la source est continue ou impulsionnelle deux types de laser sont utilisés pour la photoinscription.

La source continue provient par exemple d'un laser à argon, ionisé Coherent Innova 70 de 4 W doublé intracavité par un cristal de bêta-borate de baryum. La source continue (dont l'irradiance est comprise entre 10 et 300 W/$cm^2$) entraîne une densification du matériau aux endroits insolés. Cette densification peut être par exemple mise en évidence par l'observation de la surface des guides plans au microscope à champ de force atomique (AFM) après insolation dans un champ d'interférences.

La source impulsionnelle provient par exemple d'un système Lambda Physics constitué d'un laser excimère XeCl pompant un laser à colorant doublé par un cristal de BBO. Cette source impulsionnelle entraîne une photoablation du matériau. Une fluence inférieure à celle utilisée donnerait des résultats plus satisfaisants.

Les variations locales d'indice photoinduites sont importantes : typiquement supérieures à $10^{-3}$, de préférence supérieures à $5.10^{-3}$. Dans certains cas, cette différence d'indice photoinduites peut être supérieure à $10^{-2}$. Cela sera le cas notamment de l'europium, mais bien entendu, d'autres terres rares ou mélanges de terres rares pourraient également présenter les mêmes qualités.

Les valeurs des différences d'indice induites sont calculées à partir des efficacités de diffraction mesurées de réseaux inscrits dans des guides plans. Le modèle utilisé tient compte de deux contributions identifiées à l'efficacité du réseau de diffraction : la variation d'indice photoinduite du matériau et le réseau de phase créé par la compaction observée au microscope à force atomique.

Bien entendu, la puissance de la source laser devra être suffisante pour assurer une variation d'indice appropriée. De même, en ce qui concerne la durée d'insolation.

L'invention concerne également des réseaux de Bragg photoinscrits dans un guide d'ondes que définis dans les revendications annexées 7 et 8.

Selon une variante préférée, le guide optique présentera une variation d'indice de réfraction supérieure ou

égale à $10^{-3}$.

En cas de mélange de cérium et d'europium, il peut être avantageux de les répartir dans plusieurs "seconds" creusets différents que l'on fait fonctionner simultanément en vue de l'obtention d'un film de composition prédéterminée. Cette condition n'est néanmoins pas indispensable.

De préférence, le flux de vapeur émis par ledit premier creuset présente la composition suivante (en mole % ; total 100 %):

- $\cdot$ 30 à 50 $PbF_2$
- $\cdot$ 30 à 50 $GaF_3$
- $\cdot$ 0 à 30 $ZnF_2$
- $\cdot$ 1 à 5 $MnF_2$ ou $CdF_2$ ou $CoF_2$
- $\cdot$ 1 à 5 $InF_3$
- $\cdot$ 0 à 10 $AlF_3$
- $\cdot$ 0 à 10 adjuvant.

Il est prévu également, de préférence, que ledit premier creuset contienne un bain d'accueil ayant la composition suivante :

- $\cdot$ 9 à 26 $YF_3$
- $\cdot$ 19 à 28 $BaF_2$
- $\cdot$ 35 à 40 $InF_3$
- $\cdot$ 18 à 25 $MnF_2$ ou $CdF_2$ ou $ZnF_2$ ou $CoF_2$
- $\cdot$ O à 10 adjuvant.

La proportion initiale en masse du bain d'accueil par rapport à la masse totale du bain initial est suffisamment importante pour maintenir une composition stable du bain d'accueil. Cette proportion varie par exemple de 50% à 90%.

Certains constituants du bain d'accueil notamment $InF_3$, $MnF_2$, $CdF_2$, et éventuellement les adjuvants, se retrouvent en faibles proportions dans le verre fluoré déposé. Le fluorure de zinc peut faire partie du bain d'accueil, mais il se retrouve alors également, en proportions qui peuvent être relativement importantes (par exemple de 10 à 30 %), dans le verre déposé auquel il confère une stabilité accrue.

La préparation du trifluorure de cérium est bien connue et ne présente aucune difficulté. Par contre, la préparation de difluorure d'europium (ion $Eu^{2+}$) nécessite certaines précautions car $EuF_2$ est un fluorure instable qui a tendance à s'oxyder.

On le préparera avantageusement par réduction de $EuF_3$ par le silicium selon la réaction :

$$4 \, EuF_3 + Si \rightarrow 4 \, EuF_2 + SiF_4$$

On utilise de préférence un excès de silicium, ce qui permet d'éviter l'oxydation éventuelle de $EuF_2$ lors du chauffage dans l'enceinte d'évaporation. Le mélange $EuF_3$- Si est chauffé sous atmosphère inerte 1 heure à 890°C puis 10 minutes à 995°C.

On décrit maintenant un mode de réalisation selon l'invention qui est donné à titre indicatif en regard des figures annexées à la présente description dans lesquelles :

- La figure 1 est une vue en coupe d'un dispositif d'évaporation pour la réalisation d'un guide planaire selon l'invention,
- La figure 2 est une vue en perspective d'un guide optique de type réseaux de Bragg selon l'invention,
- La figure 3 est une vue en perspective d'un composant optique comportant un guide optique selon l'invention,
- La figure 4 est un graphe reproduisant les courbes expérimentales de variation de l'efficacité de diffraction, en fonction du temps d'insolation pour les exemples 1, 2 et 3 qui seront décrits ci-après.

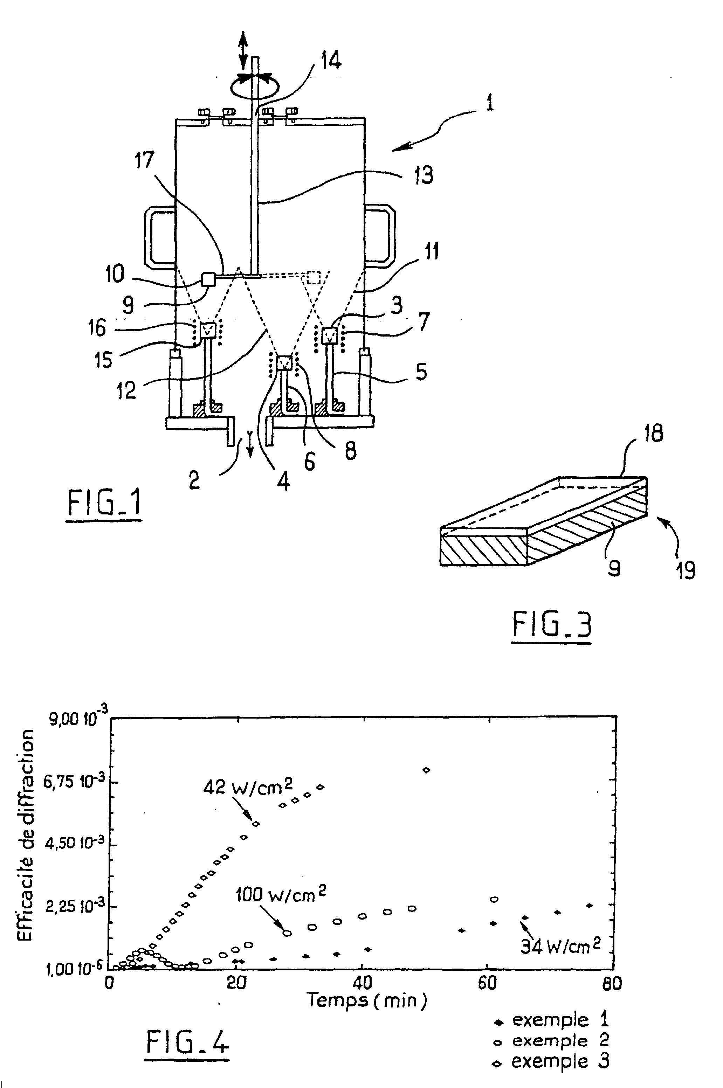

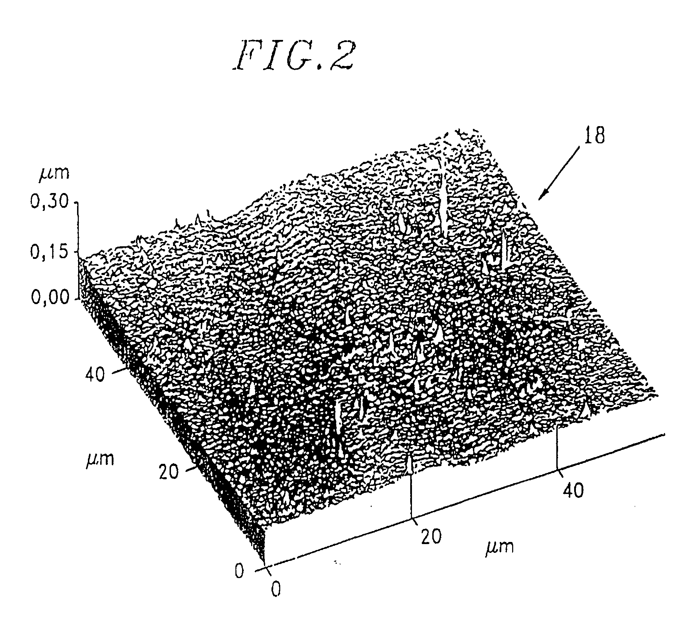

Selon la figure 1, l'enceinte d'évaporation 1 est une cloche en acier inox de 33 cm de diamètre, de volume 40 litres connectée par une sortie 2 via un piège à azote liquide à un groupe de pompage permettant un vide de quelques $10^{-4}$ mbar. La sortie 2 est décalée par rapport à l'axe de la cloche. Un premier creuset 3 en graphite contenant la composition de verre fluoré PZG et un second creuset 4 également en graphite contenant la composition de fluorure de lanthanide sont logés dans ladite enceinte. Chacun de ces creusets est disposé sur une tige céramique support de thermocouple 5, 6 respectivement, et chauffé séparément par des spires haute fréquence 7, 8, respectivement.

Un substrat 9 disposé dans un porte-échantillon 10 chauffant mobile fixé à un bras 17 est disposé dans la zone commune des cônes 11 et 12 des flux émis respectivement par les deux creusets 3 et 4. La position optimale porte-substrat-creuset est réglable au niveau de l'axe de rotation 13 du porte-échantillon portant le bras support 17 du porte-échantillon, qui peut pivoter et coulisser par le passage étanche tournant 14 situé au sommet de l'enceinte 1. Des caches, non illustrés, peuvent éventuellement être disposés au moins partiellement devant le substrat.

Un troisième creuset 15 en carbone graphite, contenant une composition de verre PZG qui peut être différente du creuset 3 ce qui permet de créer des sauts d'indice dans le guide est situé de telle manière que le cône d'émission n'interfère pas avec les cônes d'émission des creusets 3 et 4. Ce creuset 15 pourvu de spires haute fréquence chauffantes 16 permettra après dépôt du film en verre fluoré PZG le recouvrement du film par un revêtement de surface.

Déroulement d'une évaporation

Les substrats utilisés sont en $CaF_2$ et ont une épaisseur de 2 à 5 mm.
Le creuset 3 contient 1 g de la composition en verre fluoré PZG suivante (en moles) :

30 % $PbF_2$
50 % $ZnF_2$
20 % $GaF_3$

pour les exemples 1, 2 et 3

et 3 g (proportion 1:4) d'un bain d'accueil de composition (en moles) :

22% $BaF_2$
37% $InF_3$
21%$CdF_2$
15% $YF_3$
5% $LaF_3$

Le creuset 4 contient 200 mg de $CeF_3$ (exemples 1 et 2) ; 200 mg de mélange $EuF_3$-Si (exemple 3).
Au contraire de $CeF_3$, $EuF_2$ est un fluorure instable qui à tendance à s'oxyder. Il est donc préparé par réduction de $EuF_3$ par le silicium selon la réaction:

$$4\ EuF_3 + Si => 4\ EuF_2 + SiF_4 \uparrow$$

On utilise un excès de silicium ce qui évite l'oxydation éventuelle de $EuF_2$ lors du chauffage dans l'enceinte d'évaporation. Le mélange $EuF_3$-Si est chauffé sous atmosphère inerte 1 heure à 890°C puis 10 minutes à 995°C.
Le porte-substrat 10 est ajusté pour qu'il se place à l'intersection des cônes d'évaporation de chaque creuset (distance creusets-substrats : environ 10 cm).
Après mise en place des creusets et du substrat, on effectue un pompage sous vide primaire pendant 2 heures puis on lance le pompage secondaire. Quand la pression est stable, le porte-substrat est chauffé jusqu'à 200°C afin d'éviter ultérieurement la fissuration du dépôt. Le chauffage des deux creusets s'effectue alors comme suit :

• verre : montée en température de 30°C/mn, palier de 5 mn à 500°C puis montée de 20°C/mn jusqu'à environ 600°C.
• fluorure de lanthanide : montée en température de 100°C/mn, palier de 5 mn à 800°C, montée de 30°C/mn, palier de 5 mn à 900°C puis montée de 10°C/mn jusqu'à la température d'évaporation qui dépend du fluorure et du taux de dopage demandé.

L'évaporation dure environ 20 mn, permettant d'obtenir des épaisseurs de quelques micromètres. Après l'évaporation, le substrat est refroidi lentement ( 3°C/mn), Avant ouverture, l'enceinte est remplie d'azote sec.
Les caractéristiques des matériaux obtenus sont résumées dans le tableau I ci-dessous :

TABLEAU I

| Exemple | Température d'évaporation du verre | Température d'évaporation du fluorure | Epaisseur μm | Taux de dopage % molaire |
|---|---|---|---|---|
| 1 | 600°C | 1000°C | 2,6 | 3% $CeF_3$ |

TABLEAU I   (suite)

| Exemple | Température d'évaporation du verre | Température d'évaporation du fluorure | Epaisseur $\mu m$ | Taux de dopage % molaire |
|---|---|---|---|---|
| 2 | 610°C | 1040°C | 3 | 1% $CeF_3$ |
| 3 | 610°C | 970°C | 1,3 | 0,1 % $EuF_2$ |

<u>Mise en évidence de la photosensibilité des guides d'onde des exemples 1, 2 et 3</u>

L'étude a été menée avec une longueur d'onde excitatrice de 244 nm. Deux types de lasers ont été utilisés pour l'étude de la photoinscription : une source continue (laser à argon ionisé Coherent Innova 70 de 4 W doublé intracavité par un cristal de bêta-borate de baryum) et une source impulsionnelle (système Lambda Physics constitué d'un laser excimère XeCI pompant un laser à colorant doublé par un cristal de BBO).

La source impulsionnelle, dans les conditions d'expérimentation utilisées, entraîne une photoablation du matériau. En revanche, la source continue, de plus faible irradiance (entre 10 et 300 W/cm$^2$) entraîne une densification du matériau aux endroits insolés. Cette densification a été mise en évidence par l'observation de la surface des guides plans au microscope à champ de force atomique (AFM) après insolation dans un champ d'interférences. Elle est à l'origine d'une des contributions à la variation d'indice.

La dynamique de variation d'indice est complexe, et plusieurs processus physiques interviennent vraisemblablement dans le mécanisme de la photoréfractivité. La figure 4 reproduit les courbes expérimentales de variation de l'efficacité de diffraction en fonction du temps d'insolation pour les trois exemples. Les différences d'indice photoinduites sont importantes : typiquement 5 x 10$^{-3}$ avec un dopage cérium, supérieur à 10$^{-2}$ avec un dopage europium (comme indiqué au tableau II ci-après). Ces valeurs de différences d'indice induites ont été calculées à partir des efficacités de diffraction mesurées de réseaux inscrits dans des guides plans. Le modèle utilisé tient compte de deux contributions identifiées à l'efficacité du réseau de diffraction: la variation d'indice photoinduite du matériau et le réseau de phase créé par la compaction observée au microscope à force atomique (les valeurs utilisées sont détaillées dans le tableau II).

TABLEAU II

| ECHANTILLON | | | CONDITION D'INSCRIPTION | | | | MESURES | | |
|---|---|---|---|---|---|---|---|---|---|
| type de guide | taux de dopage | e (µm) | $\lambda_p$ (nm) | Fl/pulses (mJ/cm²) ou irradiance (W/cm²) | Nombre de pulses ou temps d'irradiation | $\Lambda$ (µm) | $\Delta\varepsilon$ (Å) | Efficacité de diffraction | $\Delta n$ |
| Selon ex. 1 | Ce3+:3 % | 2,6 | 244 | puls:300 | 40 | 1 | >300 | $2.7.10^{-3}$ | $7.10^{-3}$ |
| | | 2,6 | 244 | cw:34 | 151 min | 1 | #25 | $3.75.10^{-3}$ | $5.22.10^{-3}$ |
| Selon ex. 2 | Ce3+:1 % | 3 | 244 | cw:100 | 159 min | 1 | #25 | $3.38.10^{-3}$ | $4.32.10^{-3}$ |
| Selon ex. 3 | Eu2+:0,1 % | 1,3 | 244 | cw:42 | 50 min | 1 | 25 | $7.09.10^{-3}$ | $1.4.10^{-2}$ |

e : épaisseur du guide ; $\lambda_p$ : longueur d'onde UV ; $\Lambda$ : pas du réseau ; $\Delta n$ : variation d'indice

Selon la figure 3, un composant optique 19 de longueur 2 cm et de largeur 1 cm comporte un substrat 9 d'épaisseur 2 à 5 mm revêtu d'une couche de verre PZG 18 d'épaisseur 1 à 10 µm

Le substrat est un matériau ayant un poli-optique : verre fluoré (ZBLAN, ZBLA, BIZYbT), monocristal ($CaF_2$,

BaF$_2$) metal (Cu, Al). Le revêtement a l'une des compositions obtenues aux exemples 1 à 3.

Le procédé selon l'invention permet donc de réaliser des composants optiques qui présentent une variation locale d'indice élevée.

**Revendications**

1. Procédé pour la réalisation de réseaux photoréfractifs du type réseaux de Bragg dans un guide d'onde en verre fluoré dopé avec au moins un élément choisi dans le groupe constitué par tes ions terres rares, ledit verre fluoré dopé présentant des propriétés de photosensibilité, c'est à dire une aptitude à subir une modification significative de son indice de réfraction sous l'effet d'une insolation par un rayonnement dans le domaine de l'ultraviolet, et les réseaux réfractifs désirés étant réalisés dans ledit guide par une insolation ultraviolette appropriée, **caractérisé en ce que** ledit guide d'onde est un guide planaire comprenant un substrat revêtu d'un film constituant la couche de guidage dudit guide planaire, et **en ce que** ledit verre fluoré dopé photosensible forme ledit film et est constitué par un verre fluoré de type de type PbF$_2$-ZnF$_2$-GaF$_2$, dit PZG, dopé avec un ou plusieurs desdits éléments choisis dans ledit groupe constitué par les ions terres rares.

2. Procédé pour la réalisation de réseaux inscrits photoréfractifs selon la revendication 1, **caractérisé en ce que** lesdits éléments dopants sont présents dans ledit film dans une proportion égale ou inférieure à 10 % en mole.

3. Procédé pour la réalisation de réseaux inscrits photoréfractifs selon la revendication 1, **caractérisé en ce que** l'insolation est réalisée au moyen d'une source laser pulsé.

4. Procédé pour la réalisation de réseaux inscrits photoréfractifs selon la revendication 1, **caractérisé en ce que** l'insolation est réalisée au moyen d'une source laser continue.

5. Procédé pour la réalisation de réseaux inscrits photoréfractifs selon l'une des revendications 3 ou 4, **caractérisé en ce que** la longueur d'onde de la source est inférieure à 300 nm.

6. Procédé pour la réalisation de réseaux inscrits photoréfractifs selon l'une des revendications précédentes, **caractérisé en ce que** les éléments dopants sont choisis dans le groupe constitué par les ions terres rares Ce$^{3+}$, Eu$^{2+}$.

7. Réseaux photoréfractifs du type réseaux de Bragg photoinscrits dans un guide d'ondes, tels qu'ils sont susceptibles d'être obtenus par le procédé selon l'une des revendications 1 à 6, ledit guide d'onde étant en verre fluoré dopé avec au moins un élément choisi dans le groupe constitué par les ions terres rares, ledit verte fluoré dopé présentant des variations locales photoinduites d'indice de réfraction constituant lesdits réseaux photoréfractifs réfractifs, **caractérisés en ce que** ledit guide d'onde est un guide planaire comprenant un substrat revêtu d'un film constituant la couche de guidage dudit guide planaire, et **en ce que** ledit verre fluoré dopé forme ledit film et est constitué par un verre fluoré de type de type PbF$_2$-ZnF$_2$-GaF$_2$, dit PZG, dopé avec un ou plusieurs desdits éléments choisis dans ledit groupe constitué par les ions terres rares.

8. Réseaux selon la revendication 7, **caractérisé en ce que** la variation de l'indice de réfraction est supérieure ou égale à 10$^{-3}$.

**Claims**

1. A method of making photorefractive gratings of the Bragg grating type in a fluoride glass waveguide doped with at least one element selected from the group constituted by rare earth ions, said doped fluoride glass presenting properties of photosensitivity, i.e. an ability to be subjected to significant modification of its refractive index under the effect of exposure to radiation in the ultraviolet range, and the desired refractive gratings being made in the waveguide by appropriate ultraviolet exposure, the method being **characterized in that** said waveguide is a planar waveguide comprising a substrate coated in a film constituting the guiding layer of said planar waveguide, and **in that** said photosensitive doped fluoride glass forms said film and is constituted by a fluoride glass of the PbF$_2$-ZnF$_2$-GaF$_2$ (PZG) type doped with one or more of said elements selected from said group constituted by rare earth ions.

2. A method of making photorefractive inscribed gratings according to claim 1, **characterized in that** said doping elements are present in said film at a concentration equal to or less than 10% molar.

3. A method of making photorefractive inscribed gratings according to claim 1, **characterized in that** exposure is performed by means of a pulse laser source.

4. A method of making photorefractive inscribed gratings according to claim 1, **characterized in that** exposure is performed by means of a continuous laser source.

5. A method of making photorefractive inscribed gratings according to claim 3 or claim 4, **characterized in that** the source wavelength is shorter than 300 nm.

6. A method of making photorefractive inscribed gratings according to any preceding claim, **characterized in that** the doping elements are selected from the group constituted by the $Ce^{3+}$ and $Eu^{2+}$ rare earth ions.

7. Photorefractive gratings of the Bragg grating type photoinscribed in a waveguide as can be obtained by the method according to any one of claims 1 to 6, the waveguide being of a fluoride glass doped with at least one element selected from the group constituted by rare earth ions, said doped fluoride glass presenting photoinduced local variations of refractive index constituting said refractive photorefractive gratings, **characterized in that** said waveguide is a planar waveguide comprising a substrate coated in a film constituting the guiding layer of said planar waveguide, and **in that** said doped fluoride glass forms said film and is constituted by a fluoride glass of the $PbF_2$-$ZnF_2$-$GaF_2$ (PZG) type doped with one or more of said elements selected from said group constituted by rare earth ions.

8. Gratings according to claim 7, **characterized in that** the variation in refractive index is greater than or equal to $10^{-3}$.


**Patentansprüche**

1. Verfahren zur Herstellung von photorefraktiven Gittern vom Typ eines Bragg-Gitters in einer Wellenführung aus einem fluorierten Glas, das mit wenigstens einem Element dotiert ist, das aus der Gruppe ausgewählt ist, die aus den Ionen seltener Erden gebildet ist, wobei das dotierte fluorierte Glas lichtempfindliche Eigenschaften aufweist, d.h. eine Neigung, eine signifikante Änderung seines Brechungsindexes unter Wirkung einer. Bestrahlung mit Strahlen im Ultraviolettbereich zu erfahren, und die gewünschten Brechungsgitter in der Führung durch eine geeignete Ultraviolettbestrahlung hergestellt werden, **dadurch gekennzeichnet, daß** die Wellenführung eine Planarführung ist, die ein Substrat aufweist, das mit einem Film ausgestattet ist, der die Führungsschicht der Planarführung bildet, und daß das lichtempfindliche dotierte fluorierte Glas diesen Film bildet und von einem fluorierten Glas vom Typ $PbF_2$-$ZnF_2$-$GaF_2$, d.h. PZG, gebildet ist, das mit einem oder mehreren der Elemente dotiert ist, die aus der Gruppe ausgewählt sind, die aus den Ionen seltener Erden gebildet ist.

2. Verfahren zur Herstellung der phtorefraktiven einbeschriebenen Gitter nach Anspruch 1, **dadurch gekennzeichnet, daß** die Dotierelemente in dem Film in einem Verhältnis von gleich oder kleiner 10 Mol% enthalten sind.

3. Verfahren zur Herstellung der photorefraktiven einbeschriebenen Gitter nach Anspruch 1, **dadurch gekennzeichnet, daß** die Bestrahlung mittels einer pulsierten Laserquelle realisiert wird.

4. Verfahren zur Herstellung der photorefraktiven einbeschriebenen Gitter nach Anspruch 1, **dadurch gekennzeichnet, daß** die Bestrahlung mittels einer kontinuierlichen Laserquelle realisiert wird.

5. Verfahren zur Herstellung der photorefraktiven einbeschriebenen Gitter nach einem der Ansprüche 3 oder 4, **dadurch gekennzeichnet, daß** die Wellenlänge der Quelle kleiner als 300 nm ist.

6. Verfahren zur Herstellung der photorefraktiven einbeschriebenen Gitter nach einem der vorhergehenden Ansprüche, **dadurch gekennzeichnet, daß** die Dotierelemente aus der Gruppe ausgewählt sind, die aus den Ionen der seltenen Erden $Ce^{3+}$, $Eu^{2+}$ gebildet ist.

7. Photorefraktive Gitter vom Typ eines Bragg-Gitters, die in eine Wellenführung lichteinbeschrieben sind, wie sie geeigneterweise gemäß dem Verfahren nach einem der Ansprüche 1 bis 6 erhalten werden, wobei die Wellenführung aus einem fluorierten Glas ist, das mit wenigstens einem Element dotiert ist, das aus der Gruppe ausgewählt ist, die aus den Ionen seltener Erden gebildet ist, wobei das dotierte fluorierte Glas lichtinduzierte lokale Variationen des Brechungsindexes aufweist, welche die photorefraktiven Brechungsgitter bilden, **dadurch gekennzeichnet, daß** die Wellenführung eine Planarführung ist, die ein Substrat umfaßt, das mit einem Film ausgestattet ist, der die Führungsschicht der Planarführung bildet, und daß das dotierte fluorierte Glas den Film bildet und durch ein fluoriertes Glas vom Typ $PbF_2$-$ZnF_2$-$GaF_2$, d.h. PZG, gebildet ist, das mit einem oder mehreren der Elemente dotiert ist, die aus der besagten Gruppe ausgewählt sind, die aus den Ionen seltener Erden gebildet ist.

8. Gitter nach Anspruch 7, **dadurch gekennzeichnet, daß** die Variation des Brechungsindexes größer oder gleich $10^{-3}$ ist.

FIG_1

FIG_3

FIG_4

exemple 1
exemple 2
exemple 3

# FIG.2